# EUROPÄISCHE PATENTSCHRIFT

(11) **EP 2 389 305 B1**
(45) Veröffentlichungstag und Bekanntmachung des Hinweises auf die Patenterteilung: **22.02.2017**
(21) Anmeldenummer: 09796699.8
(22) Anmeldetag: 16.12.2009
(51) Int. Cl.: B60T 8/40, B60T 13/74

(54) **VERFAHREN ZUM BETREIBEN EINES ELEKTROHYDRAULISCHEN BREMSSYSTEMS UND ELEKTROHYDRAULISCHES BREMSSYSTEM WORIN DAS VERFAHREN DURCHGEFÜHRT WIRD**
OPERATING METHOD FOR AN ELECTRO HYDRAULIC BRAKING SYSTEM AND AN ELECTRO HYDRAULIC BRAKING SYSTEMIN WHICH THE METHOD IS CARRIED OUT
METHODE D'OPERATION D'UN SYSTEME DE FREINAGE ELECTRO-HYDRAULIQUE ET UN SYSTEME DE FREINAGE ELECTRO-HYDRAULIQUE DANS LEQUEL CETTE METHODE EST MISE EN OEUVRE

(30) Priorität: 23.01.2009 DE 102009005937
(43) Veröffentlichungstag der Anmeldung: 30.11.2011
(73) Patentinhaber: Continental Teves AG & Co. OHG, 60488 Frankfurt (DE)
(72) Erfinder: DRUMM, Stefan, A., 55291 Saulheim (DE)
(86) Internationale Anmeldenummer: PCT/EP2009/067331
(87) Internationale Veröffentlichungsnummer: WO 2010/083925

(56) Entgegenhaltungen:
- EP-A2- 1 090 823
- EP-A2- 1 106 461
- WO-A1-97/14590
- WO-A1-97/18116
- WO-A2-02/064409
- DE-A1-102006 060 434
- JP-A- 11 048 950
- JP-A- 59 118 559
- US-A1- 2002 140 283
- US-A1- 2008 246 333

## Beschreibung

Die Erfindung betrifft ein elektrohydraulisches Bremssystem zur Verwendung in Fahrzeugen, die mittels Generatorbetrieb eines elektrischen Antriebsmotors abbremsbar sind, mit einer mittels eines Bremspedals gesteuerten Betätigungseinheit, die als Kombination eines hydraulischen Hauptbremszylinders mit einem vorgeschalteten Bremskraftverstärker ausgebildet ist, der einer über das Bremspedal eingeleiteten Betätigungskraft eine Verstärkungskraft additiv überlagert, mit an die Betätigungseinheit angeschlossenen, hydraulischen Bremsleitungen, an die Bremsen des Fahrzeuges angeschlossen sind, mit einer elektronischen Steuereinheit, die zum Verteilen der Bremswirkung auf einen generatorischen Anteil bzw. Rekuperationsbremsanteil und einen Reibungsbremsanteil vorgesehen ist, sowie mit einer an die Betätigungseinheit angeschlossenen Zylinder-Kolben-Anordnung zur Entnahme eines Druckmittelvolumens, das dem generatorischen Anteil bzw. Rekuperationsbremsanteil entspricht. Außerdem betrifft die Erfindung ein Verfahren zum Betrieb eines derartigen Bremssystems.

In Pkw nach dem allgemeinen Stand der Technik wird infolge einer Bremspedalbetätigung durch den Fahrer in den Druckkammern des Hauptbremszylinders Hydraulikfluid (= Druckmittel) durch eine Hauptbremszylinderkraft unter einen Druck gesetzt, die sich im Verhältnis 1 zu V-1 aus einer vom Fahrer aufgebrachten Betätigungskraftkomponente und einer vom Bremskraftverstärker aufgebrachten Verstärkungskraftkomponente zusammensetzt. In Pkw-Bremssystemen liegt der Kraftverstärkungsfaktor V üblicherweise zwischen 3 und 7, in den meisten Pkw etwa bei 4. Das heißt, dass bei einer Bremspedalbetätigung zur Aktivierung der Reibungsbremsen eines durchschnittlichen Pkws der Hauptzylinderdruck zu 4/5 vom Bremskraftverstärker und nur zu 1/5 vom Fahrer über das Bremspedal erzeugt wird. Dies hat den angenehmen Effekt, dass Pkw-Bremsanlagen mit moderaten Pedalkräften bedienbar sind.

Ein elektrohydraulisches Bremssystem der eingangs genannten Gattung ist in der DE 10 2006 060 434 A1 beschrieben. Bei dem vorbekannten Bremssystem wird vorgeschlagen, bei Rekuperationsbremsungen zur Simulation der von Normalbremsungen bekannten Bremspedalcharakteristik, das im Hauptbremszylinder unter Druck gesetzte Hydraulikfluid nicht zu den Radbremsen weiterzuleiten, sondern in einer Zylinder-Kolben-Anordnung aufzunehmen. Als nachteilig wird dabei empfunden, dass 4/5 (bei V = 4, ansonsten ein Anteil V/(1+V)) der aufgebrachten Druckwerte und die damit verbundene Druckmittelaufnahme unnötig sind. Bei Rekuperationsbremsungen wird keine Bremskraftverstärkung benötigt.

Aus der EP 1 106 461 ist ein Verfahren bekannt, bei dem eine Strömungssteuerungsvorrichtung so angesteuert wird, dass ein Druck eines Fluids in einer Hilfskammer dann, wenn eine Regenerativbremsvorrichtung in Betrieb ist, niedriger ist, als wenn die Regenerativbremsung nicht in Betrieb ist.

Aus der US 2008 024 63 33 A1 ist ein Bremssystem mit einem sekundären Hauptzylinder bekannt, bei dem durch ein elastisches Elementen im sekundären Hauptzylinder die gewünschte Bremspedalcharakteristik sichergestellt wird.

Aus der WO97/18 116 A1 ist eine Bremsanlage bekannt, bei der eine steuerbare Druckquelle durch eine Zylinder/Kolbenanordnung gebildet ist.

Aus der JPH 114 89 50H ist ein Bremspedalwegsimulator bekannt, dessen Fluidaufnahme durch Ansteuerung eines Motors angepasst werden kann.

Es ist daher Aufgabe der vorliegenden Erfindung, den genannten Nachteil des vorbekannten Bremssystems zu eliminieren.

Diese Aufgabe wird erfindungsgemäß durch ein Verfahren gemäß Anspruch 1, sowie ein Bremssystem gemäß Anspruch 7 gelöst.

Erfindungsgemäß ist der Bremskraftverstärker durch die elektronische Steuereinheit elektrisch ansteuerbar ausgebildet.

Erfindungsgemäß wird die vom Bremskraftverstärker erzeugte Verstärkungskraft in Abhängigkeit von bremssystemrelevanten Größen aufgebracht. Die Zylinder-Kolben-Anordnung ist durch einen elektromechanisch-hydraulischen Aktuator gebildet. Während einer reinen Rekuperationsbremsung sowie einer anteiligen Reibungs- und Rekuperationsbremsung wird die Volumenaufnahme der Zylinder-Kolben-Anordnung so gesteuert, dass sich die bei reinen Reibungsbremsungen mit einer vorbestimmten Verstärkungskraft ergebende Bremspedalcharakteristik einstellt

Die bremssystemrelevanten Größen sind vorzugsweise einerseits die Verzögerungsanforderungen von Fahrer und automatischen Fahrerassistenzsystemen und andererseits die Verzögerungspotentiale einer Rekuperationsbremsung, einer unverstärkten, einer verstärkten, und einer elektronisch gesteuerten Betätigung der Reibungsbremsen sowie deren Mischformen. Durch diese Merkmale kann die genannte Verbesserung im Betrieb des erfindungsgemäßen Bremssystems erzielt werden.

Wenn die Summe der Verzögerungspotentiale einer Rekuperationsbremsung und einer unverstärkten Bremsung genügen, um die Verzögerungsanforderung zu erfüllen reicht es aus, die gewohnte Pedalcharakteristik herzustellen, indem die Zylinder-Kolben-Anordnung Hydraulikfluid mit dem aus lediglich der Betätigungskraftkomponente herrührenden "unverstärkten" Druck des Hauptbremszylinders aufnimmt. Dadurch wird bei Rekuperationsbremsungen ein unnötiger Stellenergieverbrauch des Bremskraftverstärkers zur Bereitstellung der Verstärkungskraftkomponente vermieden.

Bevorzugt wird die Verstärkungskraft durch die Wirkung eines elektronisch geregelten Druckes erzeugt, der von einer Druckquelle bereitgestellt wird.

Gemäß einer Weiterbildung des erfindungsgemäßen Bremssystems umfasst die Druckquelle einen mittels einer Pumpe aufladbaren hydraulischen Hochdruckspeicher. Vorteilhafterweise umfasst die Druckquelle zur Bereitstellung des elektronisch geregelten Druckes ebenfalls ein Druckregelventil.

Bevorzugt ist der Kolben der Zylinder-Kolben-Anordnung als ein Stufenkolben ausgebildet.

Gemäß einer bevorzugten Ausführungsform ist die größere Fläche des Stufenkolbens unter Zwischenschaltung eines elektromagnetisch ansteuerbaren 2/2-Wegeventils mit der Druckquelle verbunden ist. Das elektromagnetisch ansteuerbare 2/2-Wegeventil ist besonders bevorzugt als ein analog regelbares, stromlos offenes (SO-) Ventil ausgeführt.

Ebenso ist es bevorzugt, dass die größere Fläche des Stufenkolbens unter Zwischenschaltung eines elektromagnetisch ansteuerbaren 2/2-Wegeventils mit einem drucklosen Druckmittelvorratsbehälter verbunden ist. Das elektromagnetisch ansteuerbare 2/2-Wegeventil ist besonders bevorzugt als ein analog regelbares, stromlos geschlossenes (SG-) Ventil ausgeführt.

Gemäß einer Weiterbildung des erfindungsgemäßen Bremssystems sind Sensormittel zur Erfassung des Betätigungsweges des Bremspedals, einer die Verstärkungskraft repräsentierenden Größe sowie des im Hauptbremszylinder eingesteuerten Druckes vorgesehen.

Gemäß einer Weiterbildung des erfindungsgemäßen Verfahrens ist während einer anteiligen Reibungs- und Rekuperationsbremsung die Verstärkungskraft so bemessen, dass sie gerade ausreicht, um die erforderliche Fahrzeugverzögerung zu bewirken.

Außerdem ist es bevorzugt, dass während einer reinen Rekuperationsbremsung der am Bremspedal eingeleiteten Betätigungskraft keine Verstärkungskraft überlagert wird.

Vorteilhafterweise wird aus dem Bremspedal-Betätigungsweg, der Bremspedal-Betätigungskraft und weiteren fahrerabhängigen und fahrerunabhängigen Werten eine Bremsanforderung ermittelt.

Ebenso ist es bevorzugt, dass aus Bremssystemdaten, wie der zulässigen Leistung des als Generator arbeitenden Elektromotors, der zulässigen Ladeleistung eines im Fahrzeug vorhandenen elektrischen Energiespeichers bzw. Akkumulators und dem aktuellen Ladezustand des im Fahrzeug vorhandenen elektrischen Energiespeichers bzw. Akkumulators ein Signal zur momentan möglichen Rekuperationsbremswirkung ermittelt wird.

Gemäß einer Weiterbildung des erfindungsgemäßen Verfahrens werden beim Vorliegen einer Bremsanforderung die Quantität (Höhe) dieser Bremsanforderung mit den Verzögerungspotentialen der momentan möglichen Rekuperationsbremsung und einer unverstärkten Weiterleitung der Bremspedalbetätigungskraft verglichen und in Abhängigkeit von diesem Vergleich unterschiedliche verzögerungswirksame Aktionen durchgeführt.

Als verzögerungswirksame Aktionen werden bevorzugt die Rekuperationsbremsung, die Weiterleitung bzw. modulierte Weiterleitung des im Hauptbremszylinder eingesteuerten Drucks an die Radbremsen und das Aufbringen einer Verstärkungskraft verwendet.

Die verzögerungswirksamen Aktionen werden vorteilhafterweise von einer elektronischen Steuer- und Regelschaltung koordiniert und so aufeinander abgestimmt, dass sich in ihrer Gesamtheit eine Fahrzeugverzögerung ergibt, die sich bei einer reinen Reibungsbremsung mit der vorbestimmten Verstärkungskraft einstellt.

Weitere bevorzugte Ausführungsformen der Erfindung ergeben sich aus den Unteransprüchen.

Die vorliegende Erfindung wird nachfolgend an zwei Ausführungsbeispielen unter Bezugnahme auf die beiliegende schematische Zeichnung näher erläutert, wobei die gleichen Komponenten mit den gleichen Bezugszeichen versehen sind. In der Zeichnung zeigen:
- Fig. 1: den Aufbau einer ersten Ausführung des erfindungsgemäßen Bremssystems,
- Fig. 2: den Aufbau einer zweiten Ausführung des erfindungsgemäßen Bremssystems, und
- Fig. 3: einen wesentlichen Teil des beim Bremssystem gemäß Fig. 2 verwendeten Bremskraftverstärkers in größerem Maßstab.

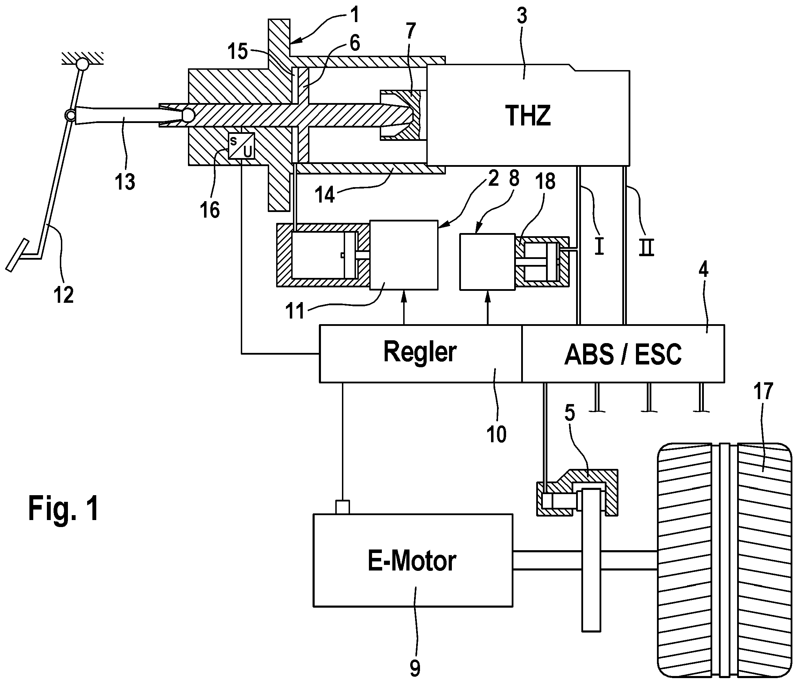

Das in Fig. 1 dargestellte erfindungsgemäße elektrohydraulische Bremssystem besteht im Wesentlichen aus einer Betätigungseinheit 1, einer hydraulischen Druckquelle 2, wobei die Betätigungseinheit 1 und die Druckquelle 2 einen Bremskraftverstärker bilden, sowie einem dem Bremskraftverstärker wirkungsmäßig nachgeschalteten Hauptbremszylinder bzw. Tandemhauptzylinder 3, an dessen nicht dargestellte Druckräume Radbremskreise I, II angeschlossen sind, die unter Zwischenschaltung eines bekannten ABS/ESP-Hydroaggregats bzw. eines steuerbaren Radbremsdruckmodulationsmoduls 4 Radbremsen eines Kraftfahrzeuges mit hydraulischem Druckmittel versorgen, von denen der Einfachheit halber lediglich eine dargestellt und mit dem Bezugszeichen 5 versehen ist. Die vorhin erwähnte Druckquelle 2 wird im gezeigten Beispiel als ein elektromechanisch-hydraulischer Aktuator 11 ausgebildet. An einen (I) der Radbremskreise I, II ist eine hydraulische Zylinder-Kolben-Anordnung 8 angeschlossen, die ebenfalls als ein elektromechanisch-hydraulischer Aktuator 18 ausgeführt ist und die bei Rekuperationsbremsungen eine Verlängerung des Bremspedalweges ermöglicht. Dem Antrieb des nicht gezeigten Fahrzeuges dient ein Elektromotor 9, der sowohl in einem Antriebsmodus, als auch in einem Rekuperationsmodus betrieben werden kann, in dem ein Anteil der zum Abbremsen des Fahrzeugs abzubauenden kinetischen Energie von dem nunmehr als Generator arbeitenden Elektromotor 9 aufgenommen wird.

Weiterhin weist das erfindungsgemäße Bremssystem eine elektronische Bremssystemsteuereinheit 10 auf. Zur Ansteuerung der Bremsbetätigungseinheit 1 ist ein Bremspedal 12 vorgesehen, mit dem eine Kolbenstange 13 gekoppelt ist, die unter Zwischenschaltung eines Verstärkerkolbens 6 in kraft-übertragender Verbindung mit einem ersten Kolben bzw. Primärkolben 7 des Hauptbremszylinders 1 steht. Der Verstärkerkolben 6 ist in einem Verstärkergehäuse 14 axial verschiebbar geführt und begrenzt dort einen hydraulischen Verstärkerraum, der mit dem Bezugszeichen 15 versehen ist. Der elektronischen Bremssystemsteuereinheit 10 werden Signale eines Wegsensors 16 sowie Daten zugeführt, die Informationen über den Zustand des Elektromotors 9 enthalten. Dabei dient der Wegsensor 16 einer Fahrerverzögerungswunscherfassung und sensiert den Betätigungsweg der Kolbenstange 13. Aus den genannten Signalen bzw. Daten werden in der elektronischen Bremssystemsteuereinheit 10 Ansteuersignale für beide elektromechanisch-hydraulischen Aktuatoren 11, 18 sowie für nicht gezeigte hydraulische Druckregelventile, die im Radbremsdruckmodulationsmodul 4 enthalten sind, aufbereitet. Ein Fahrzeugrad, das mit einem Elektromotor 9 angetrieben und abgebremst werden kann, ist mit dem Bezugszeichen 17 versehen.

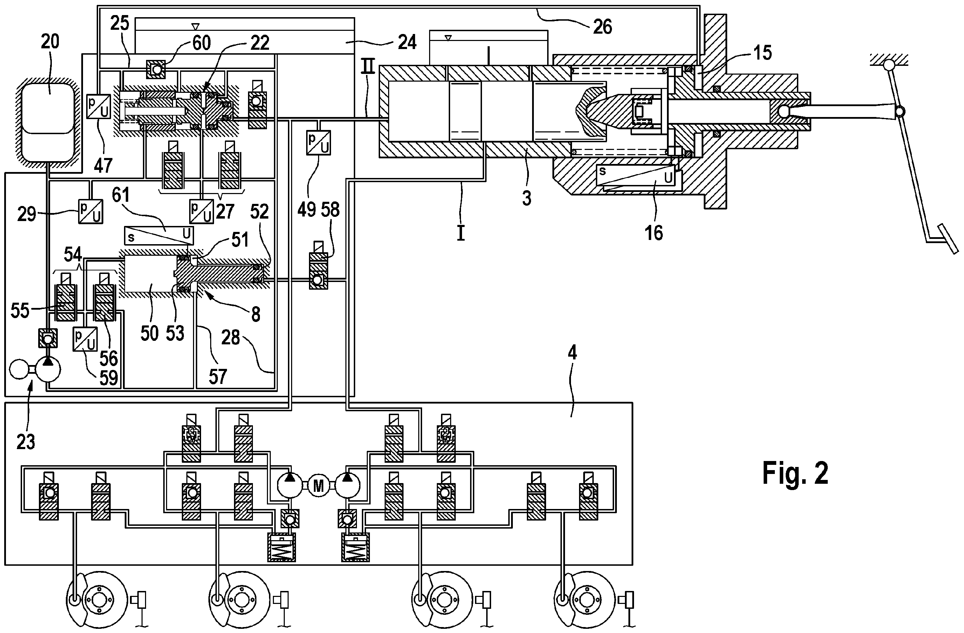

Bei der in Fig. 2 gezeigten Ausführung wird die vorhin erwähnte Druckquelle 2 durch einen hydraulischen Hochdruckspeicher 20 mit einem nachgeschalteten Druckregelventil 22 gebildet. Dem Aufladen des Hochdruckspeichers 20 dient ein Motor-Pumpen-Aggregat 23. Der Ausgang des Druckregelventils 22 ist einerseits mittels einer hydraulischen Verbindung 25 mit einem Druckmittelvorratsbehälter 24 und andererseits über eine an die hydraulische Verbindung 25 anschließende Leitung 26 mit dem im Zusammenhang mit Fig. 1 erwähnten, dem Hauptbremszylinder 3 vorgeschalteten Verstärkerraum 15 verbunden. Dem Druckregelventil 22 ist eine Vorsteuerstufe 27 zugeordnet, deren Aufgabe im nachfolgenden Text erläutert wird. Eine weitere Leitung 28 verbindet die Saugseite des Motor-Pumpen-Aggregats 23 mit dem vorhin genannten Druckmittelvorratsbehälter 24. Das Motor-Pumpen-Aggregat 23 ist vorzugsweise als eine selbständige Baugruppe ausgebildet und mit körperschall-isolierenden Befestigungen und Hydraulikverbindungen ausgestattet. Der im Hochdruckspeicher 20 bereit gehaltene hydraulische Druck wird von einem Drucksensor erfasst, der mit dem Bezugszeichen 29 versehen ist.

Weiterhin ist Fig. 2 zu entnehmen, dass die im Zusammenhang mit Fig. 1 erwähnte Zylinder-Kolben-Anordnung 8 durch eine erste hydraulische Kammer 50, eine zweite hydraulische Kammer 51, eine dritte hydraulische Kammer 52 sowie einen Stufenkolben 53 gebildet ist. Dabei trennt die größere Fläche des Stufenkolbens 53 die erste (50) von der zweiten Kammer 51, während die dritte Kammer 52 von der kleineren Fläche des Stufenkolbens 53 begrenzt wird. Der vom Stufenkolben 53 zurück gelegte Weg wird von einem Wegsensor überwacht, der mit dem Bezugszeichen 61 versehen ist. Die erste hydraulische Kammer 50 ist an eine Ventilanordnung 54 angeschlossen, die von einer Reihenschaltung zweier analog regelbarer 2/2-Wegeventile 55, 56 gebildet ist. Das erstgenannte 2/2-Wegeventil 55 ist als ein stromlos offenes (SO-) Ventil ausgeführt und ist vorzugsweise zwischen der ersten Kammer 50 und dem vorhin genannten Hochdruckspeicher 20 geschaltet. Das zweitgenannte 2/2-Wegeventil 56 ist als ein stromlos geschlossenes (SG-) Ventil ausgeführt und ist vorzugsweise zwischen der ersten Kammer 50 und der zum Druckmittelvorratsbehälter 24 führenden Leitung 28 geschaltet. Die zweite hydraulische Kammer 51 steht über einen Leitungsabschnitt 57 mit der Leitung 28 und somit mit dem Druckmittelvorratsbehälter 24 in Verbindung, während die dritte Kammer 52 unter Zwischenschaltung eines 2/2-Wegeventils 58 an den ersten Bremskreis I angeschlossen ist. Das 2/2-Wegeventil 58 erfüllt im dargestellten Betriebs-(Ruhe-)zustand die Funktion eines zur Zylinder-Kolben-Anordnung 8 schließenden Rückschlagventils, während bei dessen Umschalten die dritte Kammer 52 mit dem Bremskreis I verbunden wird. Der in der ersten hydraulischen Kammer 50 eingesteuerte Druck wird am Mittenabgriff der Ventilanordnung 54 mittels eines Drucksensors erfasst, der mit dem Bezugszeichen 59 versehen ist.

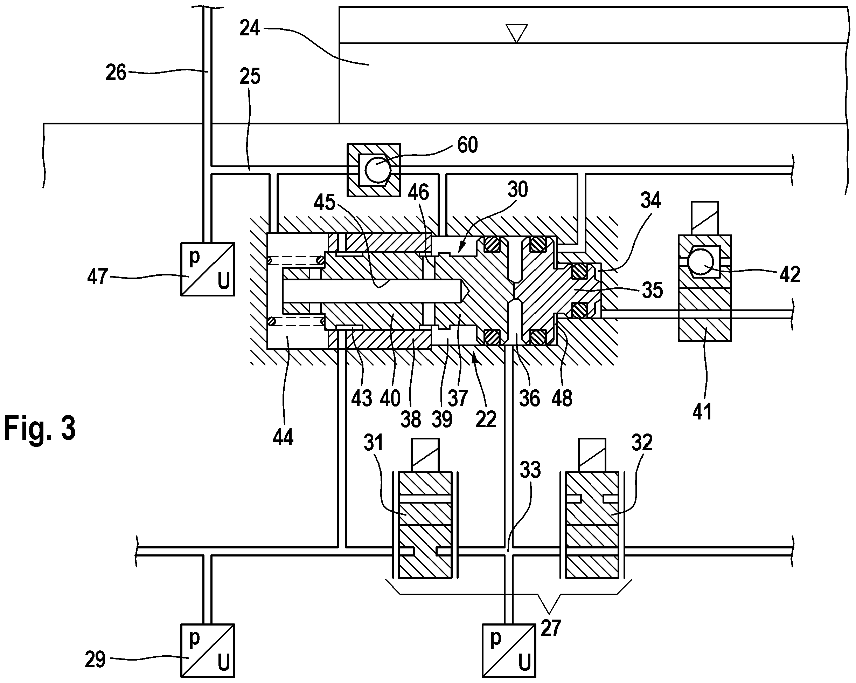

Wie insbesondere Fig. 3 zu entnehmen ist, ist das Druckregelventil 22 zweistufig ausgeführt und weist vorzugsweise außer der genannten elektrisch ansteuerbaren Vorsteuerstufe 27 eine zweifach hydraulisch ansteuerbare Ventilhauptstufe auf, die mit dem Bezugszeichen 30 versehen ist, sowie eine hydraulische Ansteuerstufe, deren Aufbau in der nachfolgenden Beschreibung erläutert wird.

Die Vorsteuerstufe 27 besteht aus einer Hintereinanderschaltung eines analog regelbaren, stromlos geschlossenen (SG-) 2/2-Wegeventils 31 sowie eines analog regelbaren, stromlos offenen (SO-) 2/2-Wegeventils 32, wobei der hydraulische Mittenabgriff 33 zwischen den beiden Ventilen 31, 32 einen der Ansteuerdrücke für die Ventilhauptstufe 30 liefert. Die hydraulische Ansteuerstufe wird durch eine erste Ansteuerkammer 34, einen ersten Ansteuerkolben bzw. Stufenkolben 35, einen mit dem Druckmittelvorratsbehälter 24 verbundenen Ringraum 48 sowie eine vom Stufenkolben 35 begrenzte zweite Ansteuerkammer 36 gebildet, die mit dem o. g. Mittenabgriff 33 der Vorsteuerstufe 27 verbunden ist. Die zweite Ansteuerkammer 36 wird andererseits von einem zweiten Ansteuerkolben 37 begrenzt, der zusammen mit einer Ventilhülse 38 eine Behälteranschlusskammer 39 begrenzt und der bei der gezeigten Ausführung einteilig mit einem Ventilkörper 40 ausgebildet ist. Die Ventilhülse 38 bildet zusammen mit dem Ventilkörper 40 die vorhin erwähnte Hauptstufe 30 des Druckregelventils 22.

Fig. 3 ist weiterhin zu entnehmen, dass die erste Ansteuerkammer 34 unter Zwischenschaltung eines elektromagnetisch betätigbaren, stromlos offenen (SO-) 2/2-Wegeventils 41 an den zweiten Bremskreis II angeschlossen ist. Das 2/2-Wegeventil 41 erfüllt in seiner bestromten Schaltstellung die Funktion eines zur Ansteuerstufe schließenden Rückschlagventils, was durch das entsprechende, mit dem Bezugszeichen 42 versehene Hydrauliksymbol angedeutet ist. Der im zweiten Bremskreis eingesteuerte Druck wird durch einen Drucksensor 49 (s. Fig. 2) erfasst.

Währenddessen bildet der Ventilkörper 40 zusammen mit der Ventilhülse 38 eine Hochdruckanschlusskammer 43, die mit dem Hochdruckspeicher (20) verbunden ist. Die Hochdruckanschlusskammer 43 wird durch ein Verschieben des Ventilkörpers 40 mit einer Arbeitsdruckkammer 44 verbunden, die den Ausgang des Druckregelventils 22 bildet und die in der dargestellten Ausgangsposition oder Ruhestellung des Ventilkörpers 40 mittels im Ventilkörper 40 ausgebildeter Druckmittelkanäle 45, 46 mit der Behälteranschlusskammer 39 verbunden ist. Der in der Arbeitsdruckkammer 44 eingesteuerte Verstärkungsdruck wird durch einen dritten Drucksensor 47 erfasst. Dabei ist es vorteilhaft, wenn der Durchmesser des in der Ventilhülse 38 geführten Ventilkörpers 40 größer als der Durchmesser der kleineren Stufe des Stufenkolbens 35 ist. Außerdem ist Fig. 3 zu entnehmen, dass an die Arbeitsdruckkammer 44 (über die vorhin genannte Verbindungsleitung 25) die zum Verstärkerraum 15 führende Leitung 26 sowie die an diese angeschlossene, zum Druckmittelvorratsbehälter 24 führende weitere Leitung 25 angeschlossen sind. In der letztgenannten Leitung 25 ist dabei ein zum Druckmittelvorratsbehälter 24 schließendes Rückschlagventil 60 eingefügt.

Im nachfolgenden Text wird die Funktionsweise des erfindungsgemäßen Bremssystems im Zusammenhang mit der Zeichnung näher erläutert.

Es ist zunächst zu erwähnen, dass aus dem Bremspedalwegsignal (Sensor 16), dem Betätigungskraftsignal, weiteren fahrerabhängigen Signalen, die beispielsweise von alternativen Bedienelementen erzeugt werden, sowie fahrerunabhängigen Signalen, die beispielsweise von Fahrerassistenzsystemen wie Abstandsregelung, Kollisionsvermeidung u.a. erzeugt werden, ein Fahrerverzögerungswunsch bzw. eine Bremsanforderung ermittelt wird. Dabei ist es sinnvoll, wenn das der Betätigungskraft entsprechende Signal durch Subtrahieren der im Verstärkungsraum 15 erzeugten Verstärkungskraft, die aus dem Ausgangssignal des Drucksensors 47 ermittelt wird, von der auf den Hauptzylinderkolben 7 wirkenden Gesamtbetätigungskraft ermittelt wird, (die aus dem Signal des Drucksensors 49 ermittelbar ist). Eine momentan mögliche Rekuperationsbremswirkung wird aus anderen Bremssystemdaten, wie der zulässigen Leistung des als Generator arbeitenden Elektromotors 9, der zulässigen Ladeleistung eines im Fahrzeug vorhandenen Energiespeichers bzw. Akkumulators, sowie des aktuellen Akkumulatorladezustandes ermittelt.

Beim Vorliegen der oben erwähnten Bremsanforderung wird ihre Quantität (Höhe) mit den Verzögerungspotentialen der momentan möglichen Rekuperationsbremsung und einer unverstärkten Weiterleitung der Bremspedalbetätigungskraft verglichen und in Abhängigkeit von diesem Vergleich werden unterschiedliche verzögerungswirksame Aktionen durchgeführt. Als verzögerungs-wirksame Aktionen werden die Rekuperationsbremsung, die Weiterleitung bzw. modulierte Weiterleitung des im Hauptbremszylinder 3 eingesteuerten Drucks an die Radbremsen und das Aufbringen einer Verstärkungskraft verwendet.

Die verzögerungswirksamen Aktionen werden von der elektronischen Steuer- und Regelschaltung 10 koordiniert und so aufeinander abgestimmt, dass sich in ihrer Gesamtheit eine Fahrzeugverzögerung ergibt, die sich bei einer reinen Reibungsbremsung mit der vorbestimmten Verstärkungskraft einstellt.

Dabei kommen im Wesentlichen zwei verschiedene Betriebsmodi in Frage:
Der erste Betriebsmodus entspricht einer reinen elektrischen, der sog. Rekuperations-Betriebsart, bei der das Fahrzeug durch die Wirkung des als Generator arbeitenden Elektromotors 9 (Fig. 1) abgebremst wird. Während der Rekuperationsbremsung wird der am Bremspedal 12 eingeleiteten Betätigungskraftkomponente keine Verstärkungskraftkomponente überlagert. Dabei wird die Volumenaufnahme der Zylinder-Kolben-Anordnung 8 so gesteuert, dass am Bremspedal 12 die Bremspedalcharakteristik spürbar ist, die sich bei reinen - hydraulischen- Bremsungen mit der vom Bremskraftverstärker 11, 15 bzw. 20, 22, 15 vorbestimmten Verstärkungskraft ergibt. Das bei einer derartigen Bremsung aus dem Hauptbremszylinder 3 verdrängte Druckmittelvolumen wird von der Zylinder-Kolben-Anordnung 8 aufgenommen, so dass die Reibungsbremsen nicht mit hydraulischem Druck beaufschlagt werden.

In einem zweiten Betriebsmodus, der durch die Hauptzylinderbetätigung sowohl durch die Betätigungskraft als auch die der Betätigungskraft überlagerten Verstärkungskraft charakterisiert ist, erfolgt eine Abbremsung des Fahrzeuges mit einem Reibungsbremsanteil sowie einem Rekuperationsbremsanteil. Die Bemessung der Verstärkungskraft erfolgt vorzugsweise derart, dass sie gerade ausreicht, um die geforderte Fahrzeugverzögerungswirkung zu erzielen. Die am Bremspedal 12 spürbare Pedalcharakteristik entspricht wieder der, die im Zusammenhang mit dem ersten Betriebsmodus erwähnt wurde. Dabei wird dem Rekuperationsbremsanteil die höchste Priorität zugeordnet, während der Verstärkungskraft die niedrigste Priorität zugeordnet wird, so dass diese zur Erzielung der geförderten Gesamtbremswirkung benötigte Verstärkungskraft klein gehalten wird.

## Patentansprüche

1. Verfahren zum Betreiben eines elektrohydraulischen Bremssystems zur Verwendung in Fahrzeugen, die mittels Generatorbetrieb eines elektrischen Antriebsmotors (9) abbremsbar sind, mit einer mittels eines Bremspedals (12) gesteuerten Betätigungseinheit (1), die als Kombination eines hydraulischen Hauptbremszylinders (3) mit einem vorgeschalteten Bremskraftverstärker (6, 11, 15; 20, 15) ausgebildet ist, der einer über das Bremspedal (12) eingeleiteten Betätigungskraft eine Verstärkungskraft additiv überlagert, mit an die Betätigungseinheit (1) angeschlossenen, hydraulischen Bremsleitungen, an die Bremsen (5) des Fahrzeuges angeschlossen sind, mit einer elektronischen Steuereinheit (10), die zum Verteilen der Bremswirkung auf einen Rekuperationsbremsanteil und einen Reibungsbremsanteil vorgesehen ist, sowie mit einer an die Betätigungseinheit (1) angeschlossenen Zylinder-Kolben-Anordnung (8) zur Aufnahme eines Druckmittelvolumens, das dem Rekuperationsbremsanteil entspricht, zur Verzögerung eines Fahrzeuges, **dadurch gekennzeichnet, dass** der Bremskraftverstärker (6, 11, 15; 20, 15) durch die elektronische Steuereinheit (10) elektrisch ansteuerbar ausgebildet ist, wobei die vom Bremskraftverstärker (11, 15; 20, 22, 15) erzeugte Verstärkungskraft in Abhängigkeit von bremssystemrelevanten Größen aufgebracht wird und die Zylinder-Kolben-Anordnung (8) durch einen elektromechanisch-hydraulischen Aktuator (18) gebildet ist, wobei während einer reinen Rekuperationsbremsung sowie einer anteiligen Reibungs- und Rekuperationsbremsung die Volumenaufnahme der Zylinder-Kolben-Anordnung (8) so gesteuert wird, dass sich die bei reinen Reibungsbremsungen mit einer vorbestimmten Verstärkungskraft ergebende Bremspedalcharakteristik einstellt.

2. Verfahren nach Anspruch 1, **dadurch gekennzeichnet, dass** die bremssystemrelevanten Größen einerseits Verzögerungsanforderungen von Fahrer und automatischen Fahrerassistenzsystemen und andererseits Verzögerungspotentiale einer Rekuperationsbremsung, eine unverstärkte, eine verstärkte, und eine elektronisch gesteuerte Betätigung der Reibungsbremsen sowie deren Mischformen sind.

3. Verfahren nach einem der Ansprüche 1 oder 2, **dadurch gekennzeichnet, dass** während einer anteiligen Reibungs- und Rekuperationsbremsung die Verstärkungskraft so bemessen ist, dass sie gerade ausreicht, um die erforderliche Fahrzeugverzögerung zu bewirken.

4. Verfahren nach einem der vorhergehenden Ansprüche,
**dadurch gekennzeichnet, dass** aus dem Wert des im Hauptbremszylinder (3) eingesteuerten Druckes und einem die Verstärkungskraft repräsentierenden Wert die am Bremspedal (12) eingeleitete Betätigungskraft ermittelt wird.

5. Verfahren nach einem der vorhergehenden Ansprüche,
**dadurch gekennzeichnet, dass** aus dem Bremspedal-Betätigungsweg, der Bremspedal-Betätigungskraft und weiteren fahrerabhängigen und fahrerunabhängigen Werten eine Bremsanforderung ermittelt wird.

6. Verfahren nach einem der vorhergehenden Ansprüche,
**dadurch gekennzeichnet, dass** aus Bremssystemdaten, wie der zulässigen Leistung des als Generator arbeitenden Elektromotors (17), der zulässigen Ladeleistung eines im Fahrzeug vorhandenen elektrischen Energiespeichers bzw. Akkumulators und dem aktuellen Ladezustand des im Fahrzeug vorhandenen elektrischen Energiespeichers bzw. Akkumulators ein Signal zur momentan möglichen Rekuperationsbremswirkung ermittelt wird.

7. Elektrohydraulisches Bremssystem zur Verwendung in Fahrzeugen, die mittels Generatorbetrieb eines elektrischen Antriebsmotors (9) abbremsbar sind, mit einer mittels eines Bremspedals (12) gesteuerten Betätigungseinheit (1), die als Kombination eines hydraulischen Hauptbremszylinders (3) mit einem vorgeschalteten Bremskraftverstärker (6, 11, 15; 20, 15) ausgebildet ist, der einer über das Bremspedal (12) eingeleiteten Betätigungskraft eine Verstärkungskraft additiv überlagert, mit an die Betätigungseinheit (1) angeschlossenen, hydraulischen Bremsleitungen, an die Bremsen (5) des Fahrzeuges angeschlossen sind, mit einer elektronischen Steuereinheit (10), die zum Verteilen der Bremswirkung auf einen generatorischen Anteil bzw. Rekuperationsbremsanteil und einen Reibungsbremsanteil vorgesehen ist, sowie mit einer an die Betätigungseinheit (1) angeschlossenen Zylinder-Kolben-Anordnung (8) zur Entnahme eines Druckmittelvolumens, das dem generatorischen Anteil bzw. Rekuperationsbremsanteil entspricht, **dadurch gekennzeichnet, dass** der Bremskraftverstärker (6, 11, 15; 20, 15) durch die elektronische Steuereinheit (10) elektrisch ansteuerbar ausgebildet ist und die Zylinder-Kolben-Anordnung (8) durch einen elektromechanisch-hydraulischen Aktuator (18) gebildet ist, wobei in der elektronischen Steuereinheit ein Verfahren nach einem der vorhergehenden Ansprüche durchgeführt wird.

8. Elektrohydraulisches Bremssystem nach Anspruch 7, **dadurch gekennzeichnet, dass** die Verstärkungskraft durch die Wirkung eines elektronisch geregelten Druckes erzeugt wird, der von einer Druckquelle (2, 11, 20) bereitgestellt wird.

9. Elektrohydraulisches Bremssystem nach Anspruch 8, **dadurch gekennzeichnet, dass** die Druckquelle (2) als ein elektromechanisch-hydraulischer Aktuator (11) ausgebildet ist.

10. Elektrohydraulisches Bremssystem nach Anspruch 8, **dadurch gekennzeichnet, dass** die Druckquelle einen mittels einer Pumpe (23) aufladbaren hydraulischen Hochdruckspeicher (20) umfasst.

11. Elektrohydraulisches Bremssystem nach Anspruch 7, **dadurch gekennzeichnet, dass** in der Verbindung zwischen der Betätigungseinheit (1) und der Zylinder-Kolben-Anordnung (8) ein Trennventil (58) eingefügt ist.

12. Elektrohydraulisches Bremssystem nach Anspruch 7 und 9, **dadurch gekennzeichnet, dass** der Kolben (53) der Zylinder-Kolben-Anordnung (8) als ein Stufenkolben ausgebildet ist.

13. Elektrohydraulisches Bremssystem nach Anspruch 8 und 12, **dadurch gekennzeichnet, dass** die größere Fläche des Stufenkolbens (53) unter Zwischenschaltung eines elektromagnetisch ansteuerbaren 2/2-Wegeventils (55) mit der Druckquelle (20) verbunden ist.

14. Elektrohydraulisches Bremssystem nach Anspruch 12 oder 13, **dadurch gekennzeichnet, dass** die größere Fläche des Stufenkolbens (53) unter Zwischenschaltung eines elektromagnetisch ansteuerbaren 2/2-Wegeventils (56) mit einem drucklosen Druckmittelvorratsbehälter (24) verbunden ist.

## Claims

1. Method for operating an electrohydraulic brake system for use in vehicles which can be braked by means of generator operation of an electric drive motor (9), with an actuation unit (1) which is controlled by means of a brake pedal (12) and is configured as a combination of a hydraulic brake master cylinder (3) and a brake booster (6, 11, 15; 20, 15); connected upstream thereof which additively superimposes a boosting force on an actuating force induced via the brake pedal (12) with hydraulic brake lines which are connected to the actuation unit (1) and to which brakes (5) of the vehicle are connected; with an electronic control unit (10) which is provided for distributing the braking effect between a recuperation braking component and a friction braking component, and with a cylinder/piston arrangement (8), connected to the actuation unit (1), for taking up a pressure medium volume which corresponds to the recuperation braking component, for decelerating a vehicle, **characterized in that** the brake booster (6, 11, 15; 20, 15) is configured to be electrically activatable by the electronic control unit (10), **wherein** the boosting force generated by the brake booster (11, 15; 20, 22, 15) is exerted as a function of variables relevant to the brake system and the cylinder/piston arrangement (8) is formed by an electrohydraulic actuator (18), wherein, during purely recuperation braking and during proportional friction and recuperation braking, the volume taken up by the cylinder/piston arrangement (8) is controlled in such a manner that the brake pedal characteristic which occurs during purely friction braking with a predetermined boosting force is established.

2. Method according to Claim 1, **characterized in that** the variables relevant to the brake system are, on the one hand, deceleration requests from the driver and from automatic driver assist systems and, on the other, deceleration potentials of recuperation braking, of an unboosted, of a boosted and of an electronically controlled actuation of the friction brakes, and of mixed forms thereof.

3. Method according to either one of Claims 1 and 2, **characterized in that** during proportional friction and recuperation braking the boosting force is calculated in such a manner that it is just sufficient to bring about the required deceleration of the vehicle.

4. Method according to any one of the preceding claims, **characterized in that** the actuating force exerted on the brake pedal (12) is determined from the value of the pressure induced in the brake master cylinder (3) and from a value representing the boosting force.

5. Method according to any one of the preceding claims, **characterized in that** a braking request is determined from the brake pedal actuation travel, the brake pedal actuating force and further driver-dependent and driver-independent variables.

6. Method according to any one of the preceding claims, **characterized in that** a signal for the instantaneously possible recuperation braking effect is determined from brake system data such as the admissible output of the electric motor (9) working as a generator, the admissible charging capacity of an electric energy storage device or battery present in the vehicle and from the current charge state of the electric energy storage device or battery present in the vehicle.

7. Electrohydraulic brake system for use in vehicles which can be braked by means of generator operation of an electric drive motor (9), with an actuation unit (1) which is controlled by means of a brake pedal (12) and is configured as a combination of a hydraulic brake master cylinder (3) and a brake booster (6, 11, 15; 20, 15); connected upstream thereof which additively superimposes a boosting force on an actuating force induced via the brake pedal (12) with hydraulic brake lines which are connected to the actuation unit (1) and to which brakes (5) of the vehicle are connected; with an electronic control unit (10) which is provided for distributing the braking effect between a generative component or recuperation braking component and a friction braking component, and with a cylinder/piston arrangement (8), connected to the actuation unit (1), for taking up a pressure medium volume which corresponds to the generative component or recuperation braking component, **characterized in that** the brake booster (6, 11, 15; 20, 15) is configured to be electrically activatable by the electronic control unit (10) and the cylinder/piston arrangement (8) is formed by an electrohydraulic actuator (18), wherein a method according to any one of the preceding claims is carried out in the electronic control unit.

8. Electrohydraulic brake system according to Claim 7, **characterized in that** the boosting force is generated by the effect of an electronically controlled pressure which is made available by a pressure source (2, 11, 20).

9. Electrohydraulic brake system according to Claim 8, **characterized in that** the pressure source (2) is in the form of an electrohydraulic actuator (11).

10. Electrohydraulic brake system according to Claim 8, **characterized in that** the pressure source comprises a hydraulic high-pressure accumulator (20) chargeable by means of a pump (23).

11. Electrohydraulic brake system according to Claim 7, **characterized in that** a block valve (58) is inserted in the connection between the actuation unit (1) and the cylinder/piston arrangement (8).

12. Electrohydraulic brake system according to Claims 7 and 9, **characterized in that** the piston (53) of the cylinder/piston arrangement (8) is in the form of a stepped piston.

13. Electrohydraulic brake system according to Claims 8 and 12, **characterized in that** the larger surface area of the stepped piston (53) is connected to the pressure source (20) via an interposed electromagnetically activatable 2/2-way valve (55).

14. Electrohydraulic brake system according to Claim 12 or 13, **characterized in that** the larger surface area of the stepped piston (53) is connected to an unpressurized pressure medium reservoir (24) via an interposed electromagnetically activatable 2/2-way valve (56).

## Revendications

1. Procédé d'utilisation d'un système électrohydraulique de freinage destiné à être utilisé dans des véhicules qui peuvent être freinés en faisant fonctionner en génératrice un moteur électrique d'entraînement (9),
avec une unité d'actionnement (1) commandée au moyen d'une pédale de frein (12) et configurée comme combinaison d'un cylindre principal de freinage hydraulique (3) précédé d'un amplificateur (6, 11, 15; 20, 15) de force de freinage qui superpose une force d'amplification ajoutée à une force d'actionnement appliquée par l'intermédiaire de la pédale de frein (12),
avec des conduits hydrauliques de frein raccordés à l'unité d'actionnement (1) et auxquels les freins (5) du véhicule sont raccordés,
avec une unité électronique de commande (10) prévue pour répartir l'effet de freinage entre une fraction de freinage par récupération et une fraction de freinage par friction et
avec un ensemble (8) de cylindre et de piston raccordé à l'unité d'actionnement (1) et recevant un volume de fluide sous pression qui correspond à la fraction de freinage par récupération, en vue de ralentir le véhicule,
**caractérisé en ce que**
l'amplificateur (6, 11, 15, 20, 15) de force de freinage est configuré de manière à pouvoir être commandé électriquement par l'unité électronique de commande (10),
**en ce que** la force d'amplification produite par l'amplificateur (11, 15; 20, 22, 15) de force de freinage est appliquée en fonction de grandeurs qui concernent le système de freinage,
**en ce que** l'ensemble (8) de cylindre et de piston est formé par un actionneur électromécanique-hydraulique (18),
**en ce que** pendant un freinage purement par récupération ainsi qu'un freinage réparti entre friction et récupération, l'augmentation du volume de l'ensemble (8) de cylindre et de piston est commandée de telle sorte que la caractéristique de pédale de frein qui résulte d'une force prédéterminée d'amplification s'établisse lors de freinages purement par friction.

2. Procédé selon la revendication 1, **caractérisé en ce que** les grandeurs associées au système de freinage sont d'une part les demandes de ralentissement exprimées par le conducteur et des systèmes automatiques d'assistance au conducteur et d'autre part les potentiels de ralentissement d'un freinage par récupération, d'un actionnement non amplifié, d'un actionnement amplifié et d'un actionnement commandé électroniquement des freins à friction, ainsi que leurs mélanges.

3. Procédé selon l'une des revendications 1 ou 2, **caractérisé en ce que** pendant un freinage partiellement par frottement et partiellement par récupération, la force d'amplification est dimensionnée de telle sorte qu'elle suffise exactement pour entraîner le ralentissement nécessaire du véhicule.

4. Procédé selon l'une des revendications précédentes, **caractérisé en ce que** la force d'actionnement appliquée sur la pédale de frein (12) est déterminée à partir de la valeur de la pression commandée dans le cylindre principal de frein (3) et d'une valeur qui représente la force d'amplification.

5. Procédé selon l'une des revendications précédentes, **caractérisé en ce qu'**une demande de freinage est déterminée à partir du parcours d'actionnement de la pédale de frein, de la force d'actionnement appliquée sur la pédale de frein, de valeurs dépendant du conducteur et d'autres valeurs indépendantes du conducteur.

6. Procédé selon l'une des revendications précédentes, **caractérisé en ce qu'**un signal d'action momentanément possible de freinage par récupération est déterminé à partir de données du système de freinage, par exemple la puissance admissible du moteur électrique (9) travaillant en génératrice, la puissance admissible de charge d'une réserve ou d'un accumulateur d'énergie électrique présents dans le véhicule et l'état actuel de la charge de la réserve ou de l'accumulateur d'énergie électrique présents dans le véhicule.

7. Système électrohydraulique de freinage destiné à être utilisé dans des véhicules qui peuvent être freinés en faisant fonctionner en génératrice un moteur électrique d'entraînement (9),
avec une unité d'actionnement (1) commandée au moyen d'une pédale de frein (12) et configurée comme combinaison d'un cylindre principal de freinage hydraulique (3) précédé d'un amplificateur (6, 11, 15; 20, 15) de force de freinage qui superpose une force d'amplification ajoutée à une force d'actionnement appliquée par l'intermédiaire de la pédale de frein (12),
avec des conduits hydrauliques de frein raccordés à l'unité d'actionnement (1) et auxquels les freins (5) du véhicule sont raccordés,
avec une unité électronique de commande (10) prévue pour répartir l'effet de freinage entre une fraction de freinage par récupération et une fraction de freinage par friction et
avec un ensemble (8) de cylindre et de piston raccordé à l'unité d'actionnement (1) et recevant un volume de fluide sous pression qui correspond à la fraction de freinage par récupération, en vue de ralentir le véhicule,
**caractérisé en ce que**
l'amplificateur (6, 11, 15, 20, 15) de force de freinage est configuré de manière à pouvoir être commandé électriquement par l'unité électronique de commande (10),
**en ce que** l'ensemble (8) de cylindre et de piston est formé par un actionneur électromécanique-hydraulique (18) et
**en ce qu'**un procédé selon l'une des revendications précédentes est mis en oeuvre dans l'unité électronique de commande.

8. Système électrohydraulique de freinage selon la revendication 7, **caractérisé en ce que** la force d'amplification est formée par l'effet d'une pression régulée électroniquement et délivrée par une source de pression (2, 11, 20).

9. Système électrohydraulique de freinage selon la revendication 8, **caractérisé en ce que** la source de pression (2) est configurée comme actionneur électromécanique-hydraulique (11).

10. Système électrohydraulique de freinage selon la revendication 8, **caractérisé en ce que** la source de pression comporte une réserve (20) hydraulique à haute pression apte à être chargée au moyen d'une pompe (23).

11. Système électrohydraulique de freinage selon la revendication 7, **caractérisé en ce qu'**une soupape de séparation (58) est insérée dans la liaison entre l'unité d'actionnement (1) et l'ensemble (8) de cylindre et de piston.

12. Système électrohydraulique de freinage selon les revendications 7 et 9, **caractérisé en ce que** le piston (53) de l'ensemble (8) de cylindre et de piston est configuré comme piston à gradins.

13. Système électrohydraulique de freinage selon les revendications 8 et 12, **caractérisé en ce que** la plus grande surface du piston (53) à gradins est reliée à la source de pression (20) par l'intermédiaire d'une soupape (55) à 2/2 voies commandée électromagnétiquement.

14. Système électrohydraulique de freinage selon les revendications 12 ou 13, **caractérisé en ce que** la plus grande surface du piston (53) à gradins est reliée à un récipient (24) de réserve de fluide non sous pression par l'intermédiaire d'une soupape (56) à 2/2 voies commandée électromagnétiquement.
